# EUROPEAN PATENT SPECIFICATION

(11) **EP 1 557 218 B1**
(45) Date of publication and mention of the grant of the patent: **28.07.2010**
(21) Application number: 05100188.1
(22) Date of filing: 13.01.2005
(51) Int. Cl.: C21B 7/00, B01D 50/00, B01D 46/24, B04C 5/04

(54) **System for purifying the exhaust gases from blast furnaces**
Abgasreinigungssystem für einen Hochofen
Dispositif de purification des gaz d'échappement d'un haut-fourneau

(30) Priority: 23.01.2004 IT GE20040005
(43) Date of publication of application: 27.07.2005
(73) Proprietor: PAUL WURTH S.A., 1122 Luxembourg (LU)
(72) Inventor: DALLASTA, Alessandro, 16148, GENOVA (IT)
(74) Representative: Office Freylinger

(56) References cited:
- WO-A-01/58568
- WO-A-95/30119
- FR-A- 2 619 498
- NL-A- 8 602 941

## Description

The present invention generally relates to a system for purifying the gases emitted by blast furnaces, and more particularly to method of modifying an existing dust catcher for blast furnace gas, so as to increase its dust separation efficiency.

Blast furnace gases are normally purified initially by passing them through a so-called "dust catcher", which is simply a large chamber of still air which enables the coarsest dust to be treated by simple settling, and then by means of a water-based washing treatment with water-gas contact in a scrubber, to remove the finer suspended particles from the gas.

A typical prior art dust catcher comprises a pressure resistant shell having a substantially cylindrical central body, a top end and a funnel-shaped bottom end. A dusty gas intake pipe extends axially downward through the top end and terminates substantially in the upper part of the cylindrical central body, normally with a diverging tube section. A gas discharge pipe is connected laterally to the top end, so as to be in communication with an annular space surrounding the dusty gas intake pipe in the top end.

Recently, iron producers have shown considerable interest in increasing the dust separation capacity of conventional dust catchers. The use of cyclone separators is the alternative way of achieving a marked improvement in the efficiency of removing dust from the gases. The conventional dust catcher is therefore replaced with a cyclone separator whenever a new blast furnace is built.

The cyclone separators presently used in replacement of dust catchers in blast furnace plants are singie-cyclones having either a tangential or axial gas inlet. In other applications it is also known to use so called multicyclones. The latter consist of a number of small-diameter cyclones, operating in parallel and having a common gas inlet and outlet. NL-A-8602941 discloses e.g. a cyclonic separator with multiple small cyclones arranged in a common housing with an optimized design. WO-A-01/58568 discloses a multicyclone apparatus particularly suited for use in conjunction with processes pertaining to the treatment of hydrocarbons. This multicyclone apparatus comprises a plurality of parallel-connected multiple-inlet cyclones.

The problem arising for blast furnace plants is that of converting existing dust catchers to more efficient systems, without having to eliminate the old dust catchers entirely.

The object of the present invention is therefore to provide a method for increasing the dust separation efficiency of existing dust catchers, by a modification of the dust catchers which provides a considerable increase in the efficiency of their separation of dust from the blast furnace gases, while retaining a significant part of the original structure and thus achieving considerable savings

This object is achieved by a method of modifying an existing dust catcher for blast furnace gas as claimed in claim 1.

A method in accordance with the present invention comprises the step of installing within a dust catcher, at the end of the diverging gas inlet pipe, a certain number, variable according to the rate of flow of the treated gas, of relatively small centrifugal cyclones of the conventional type, which can be contained within the existing shell of the dust catcher, in such a way that the inlet side of the cyclones communicates with the gas inlet pipe of the dust catcher, while their gas outlet side communicates with the pipe for discharging the gases from the dust catcher.

In one embodiment of the invention, the bases of the cyclones are open, so that the dust is discharged directly into the compartment provided in the dust catcher.

In a variant embodiment of the invention, the cyclones can be closed by the conventional conical bases.

Further objects and advantages of the present invention will be made clear by the following description, illustrated by way of example and without restrictive intent in the attached drawings, in which:

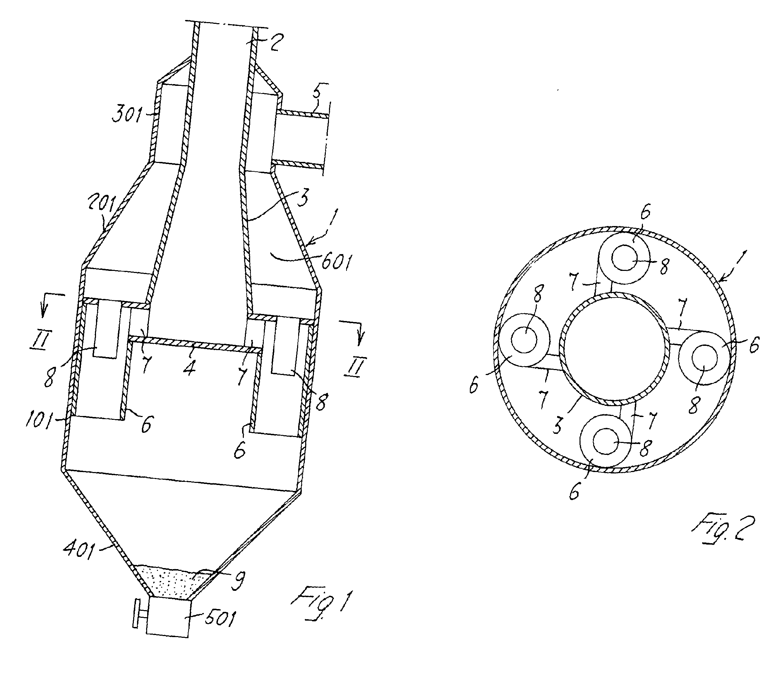

Figure 1 is an axial longitudinal section through a dust catcher modified according to the invention, and
Figure 2 is a cross section, taken along the plane of the line II-II of Figure 1, of the dust catcher of Figure 1.

With reference to the drawings, the number 1 indicates the shell of the dust catcher. This shell 1 has a substantially cylindrical central body 101, which is connected at its top by means of a truncated conical body 201 and a cylindrical section of smaller diameter 301 to the pipe 2, which supplies the dusty gas from the blast furnace, and which is has in its lower area a funnel-shaped part 401 which terminates in a valve 501 for discharging the separated dust 9.

The upper cylindrical section 301 of the chamber 1 communicates, via a discharge pipe 5, with a scrubber (not shown). The dusty gas intake pipe 2 extends downwards into the chamber 1, concentrically with the chamber, and has a diverging tubular section 3 which terminates substantially at the height of the upper part of the cylindrical body 101 of the chamber 1. A wall 4 closes the base of the diverging tube 3. A plurality of cyclones 6 (four in the illustrated example) are mounted in the void of the cylindrical body, all round the base of the diverging tube 3. These cyclones communicate through the tangential pipes 7 with the diverging tube 3, and through the central pipes 8 with the space between the chamber 1 and the diverging supply tube 3, and through this space with the pipe 5 for discharging the gas to the scrubber. As illustrated, the cyclones 6 are open at their bases, to discharge the separated dust 9 directly into the collecting funnel 401 of the dust chamber, from which it can be discharged in a known way through the valve 501.

The operation of the described equipment is as follows.. The gas carrying the dust from the blast furnace passes through the pipe 2 into the diverging pipe 3 inside the dust chamber 1, and is forced through the tangential pipes 7 into the cyclones 6, where the dust 9, which is separated by the centrifugal action created by the vortical motion within the cyclone, is discharged through the base of the cyclone into the funnel-shaped end 401 of the dust chamber, while the purified gas flows through the central pipes 8 and the space 601 to the discharge pipe 5, which is connected to the scrubber.

The advantages of the described system are evident. The efficiency of the dust chamber 1 is greatly increased by means of small-scale, modest modifications, and therefore at low cost.

Furthermore, these small internal cyclones 6 are structurally undemanding, in the sense that they are not subject to pressure. This is because, whereas the gas within the system, and therefore also within the dust catcher, is at a pressure of 1, 2 or 3 atmospheres, and therefore the whole shell of the dust catcher has to be designed to withstand this pressure, these cyclones within the dust catcher are not subject to pressure, since they are completely surrounded by the pressurized environment of the dust catcher.

These small cyclones can therefore be made lighter and simpler, because they do not have the typical lower conical parts, since they discharge within the dust catcher itself.

Clearly, the present invention is not limited to the embodiment which is illustrated and described.

Thus, for example, although the use of cyclones with open bases has been illustrated and referred to in the drawings and in the corresponding description, it is to be understood that it is also possible to use entirely conventional cyclones, in other words those having the usual conical bases.

## Claims

1. A method of modifying an existing dust catcher for blast furnace gas, so as to increase its dust separation efficiency, said existing dust catcher comprising:
a pressure resistant shell (1) having a substantially cylindrical central body (101), a top end (201, 301) and a funnel-shaped bottom end (401), wherein a dusty gas intake pipe (2, 3) extends axially downward through the top end (201, 301) and terminates in the upper part of said cylindrical central body (101), and a gas discharge pipe (5) is connected laterally to said top end (201, 301) so as to be in communication with an annular space (601) surrounding said dusty gas intake pipe (2, 3) in said top end (201, 301);
said method being **characterized by** the following steps:
installing one or more centrifugal cyclones (6), which are relatively small in comparison to said existing dust catcher, within said cylindrical central body (101) of said existing pressure resistant shell (1), around the lower end of said dusty gas intake pipe (2, 3), wherein each of said centrifugal cyclones (6) includes a cyclone chamber, a tangential pipe (7), for admitting gas into the cyclone chamber, and a central pipe (8) for discharging the gas out of the cyclone chamber, so that said cyclones (6) communicate through their tangential pipes (7) with said dusty gas intake pipe (3), and through their central pipes (8) with said annular space (601) surrounding said dusty gas intake pipe (2, 3) in said top end (201, 301) of said existing dust catcher; and
closing said dusty gas intake pipe (3) at its base, so that the dust carrying gas flowing through said dusty gas intake pipe (3) is forced into said centrifugal cyclones (6).

2. The method as claimed in claim 1, wherein the number of cyclones (6) to be installed within said cylindrical central body (101) of said pressure resistant shell (1) is determined according to the expected rate of flow of the treated gas.

3. The method as claimed in claim 1 or 2, wherein said cyclones (6) have open bases, so that they discharge the dust directly into said funnel-shaped bottom end (401) of said dust catcher.

4. The method as claimed in claim 1 or 2, wherein said cyclones (6) are provided with conical bases for collecting the dust.

5. The method as claimed in any one of claims 1 to 4, wherein said gas intake pipe (2, 3) has a diverging tubular section (3), which terminates substantially at the height of the upper part of the cylindrical body (101).

6. The method as claimed in any one of claims 1 to 5, wherein said top end (201, 301) of said existing dust catcher comprises: a truncated conical body (201), which is connected to the top of said central body (101), and an upper cylindrical section (301), which has a smaller diameter than said central body (101) and is connected to the top of said truncated conical body (201).

7. The method as claimed in any one of claims 1 to 6, **characterized by** closing the base of the gas intake pipe (2, 3) with a wall (4),

## Patentansprüche

1. Verfahren zum Modifizieren eines bestehenden Staubsacks für Hochofengas, um dessen Staubabscheidegrad zu steigern, wobei der bestehende Staubsack umfasst:
einen druckfesten Mantel (1) mit einem im Wesentlichen zylindrischen mittleren Körper (101), einem oberen Ende (201, 301) und einem trichterförmigen unteren Ende (401), wobei sich ein Zufuhrrohr (2, 3) für staubführendes Gas axial durch das obere Ende (201, 301) nach unten erstreckt und im oberen Teil des zylindrischen mittleren Körpers (101) endet und ein Gasabfuhrrohr (5) seitlich derart an das obere Ende (201, 301) angeschlossen ist, dass es mit einem ringförmigen Raum (601) kommuniziert, der das Zufuhrrohr (2, 3) für staubführendes Gas im oberen Ende (201, 301) umgibt;
wobei das Verfahren durch folgende Schritte **gekennzeichnet** ist:
Anbringen eines oder mehrerer Zentrifugalzyklone (6), die verglichen mit dem bestehenden Staubsack relativ klein sind, innerhalb des zylindrischen mittleren Körpers (101) des bestehenden druckfesten Mantels (1) rund um das untere Ende des Zufuhrrohres (2, 3) für staubführendes Gas, wobei jeder der Zentrifugalzyklone (6) eine Zyklonkammer, ein tangentiales Rohr (7) zum Einlassen von Gas in die Zyklonkammer und ein mittiges Rohr (8) zum Abführen des Gases aus der Zyklonkammer umfasst, so dass die Zyklone (6) über deren tangentiale Rohre (7) mit dem Zufuhrrohr (3) für staubführendes Gas und über deren mittige Rohre (8) mit dem ringförmigen Raum (601), welcher das Zufuhrrohr (2, 3) für staubführendes Gas im oberen Ende (201, 301) des bestehenden Staubsacks umgibt, kommunizieren; und
Verschließen des Zufuhrrohres (3) für staubführendes Gas an dessen Fußstück, so dass das staubführende Gas, welches durch das Zufuhrrohr (3) für staubführendes Gas strömt, in die Zentrifugalzyklone (6) getrieben wird

2. Verfahren nach Anspruch 1, wobei die Anzahl von Zyklonen (6), die in dem zylindrischen mittleren Körper (101) des druckfesten Mantels (1) anzubringen sind, entsprechend dem erwarteten Durchsatz des behandelten Gases festgelegt wird.

3. Verfahren nach Anspruch 1 oder 2, wobei die Zyklone (6) offene Fußstücke aufweisen, so dass sie den Staub direkt in das trichterförmige untere Ende (401) des Staubsacks abführen

4. Verfahren nach Anspruch 1 oder 2, wobei die Zyklone (6) mit konischen Fußteilen zum Sammeln des Staubs versehen sind.

5. Verfahren nach einem beliebigen der Ansprüche 1 bis 4, wobei das Gaszufuhrrohr (2, 3) einen divergierenden rohrförmigen Abschnitt (3) aufweist, der im Wesentlichen auf der Höhe des oberen Teils des zylindrischen Körpers (101) endet

6. Verfahren nach einem beliebigen der Ansprüche 1 bis 5, wobei das obere Ende (201, 301) des bestehenden Staubsackes umfasst einen kegelstumpfförmigen Körper (201), der mit dem oberen Ende des mittleren Körpers (101) verbunden ist, und einen oberen zylindrischen Abschnitt (301), der einen kleineren Durchmesser als der mittlere Körper (101) aufweist und mit dem oberen Ende des kegelstumpfförmigen Körpers (201) verbunden ist

7. Verfahren nach einem beliebigen der Ansprüche 1 bis 6, **gekennzeichnet durch** Verschließen des Fußstücks des Gaszufuhrrohres (2, 3) mit einer Wand (4).

## Revendications

1. Procédé de modification d'un capteur de poussière existant pour un gaz de haut-fourneau de manière à augmenter son rendement de séparation de poussière, ledit capteur de poussière existant comprenant :
une enveloppe résistant à la pression (1) comprenant un corps central essentiellement cylindrique (101), une extrémité supérieure (201, 301) et une extrémité inférieure en forme d'entonnoir (401), dans lequel un tuyau d'admission de gaz poussiéreux (2, 3) s'étend axialement vers le bas à travers l'extrémité supérieure (201, 301) et se termine dans la partie supérieure dudit corps central cylindrique (101) et un tuyau de décharge de gaz (5) est relié latéralement à ladite extrémité supérieure (201, 301) de manière à être en communication avec un espace annulaire (601) entourant ledit tuyau d'admission de gaz poussiéreux (2, 3) dans ladite extrémité supérieure (201, 301) ;
ledit procédé étant **caractérisé par** les étapes suivantes :
installation d'un ou de plusieurs cyclones centrifuges (6), qui sont relativement petits par rapport audit capteur de poussière existant, à l'intérieur dudit corps central cylindrique (101) de ladite enveloppe résistant à la pression (1) existante, autour de l'extrémité inférieure dudit tuyau d'admission de gaz poussiéreux (2, 3), dans lequel chacun desdits cyclones centrifuges (6) inclut une chambre de cyclone, un tuyau tangentiel (7) pour l'admission de gaz dans la chambre de cyclone et un tuyau central (8) pour décharger le gaz à l'extérieur de la chambre de cyclone, de sorte que lesdits cyclones (6) communiquent avec ledit tuyau d'admission de gaz poussiéreux (3) par l'intermédiaire de leurs tuyaux tangentiels (7) et avec ledit espace annulaire (601) entourant ledit tuyau d'admission de gaz poussiéreux (2, 3) dans ladite extrémité supérieure (201, 301) dudit capteur de poussière existant par l'intermédiaire de leurs tuyaux centraux (8) ; et
fermeture dudit tuyau d'admission de gaz poussiéreux (3) à sa base de manière à ce que le gaz transportant la poussière s'écoulant à travers ledit tuyau d'admission de gaz poussiéreux (3) soit obligé d'entrer dans lesdits cyclones centrifuges (6).

2. Procédé selon la revendication 1, dans lequel le nombre de cyclones (6) à installer à l'intérieur dudit corps central cylindrique (101) de ladite enveloppe résistant à la pression (1) est déterminé selon le débit attendu du gaz traité

3. Procédé selon la revendication 1 ou 2, dans lequel lesdits cyclones (6) ont des bases ouvertes de manière à décharger la poussière directement dans ladite extrémité inférieure en forme d'entonnoir (401) dudit capteur de poussière

4. Procédé selon la revendication 1 ou 2, dans lequel lesdits cyclones (6) sont pourvus de bases coniques pour collecter la poussière

5. Procédé selon l'une quelconque des revendications 1 à 4, dans lequel ledit tuyau d'admission de gaz (2, 3) a une section tubulaire allant s'élargissant (3) qui se termine sensiblement à la hauteur de la partie supérieure du corps cylindrique (101)

6. Procédé selon l'une quelconque des revendications 1 à 5, dans lequel ladite extrémité supérieure (201, 301) dudit capteur de poussière existant comprend : un corps tronconique (201) qui est relié au sommet dudit corps central (101) et une section cylindrique supérieure (301) qui a un plus petit diamètre que ledit corps central (101) et est reliée au sommet dudit corps tronconique (201)

7. Procédé selon l'une quelconque des revendications 1 à 6, **caractérisé par** la fermeture de la base du tuyau d'admission de gaz (2, 3) par une paroi (4)
